(19) Europäisches Patentamt
European Patent Office
Office européen des brevets

(11) **EP 3 767 820 A1**

(12) **EUROPEAN PATENT APPLICATION**

(43) Date of publication:
**20.01.2021 Bulletin 2021/03**

(51) Int Cl.:
**H02P 23/14** $^{(2006.01)}$      **H02P 9/30** $^{(2006.01)}$

(21) Application number: **19187176.3**

(22) Date of filing: **19.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **AVL POWERTRAIN UK LTD**
**Basildon**
**SS15 6SR (GB)**

(72) Inventor: **Deriszadeh, Adel**
**Laindon, Basildon, SS15 6LX (GB)**

(74) Representative: **Wietzke, Andreas et al**
**Mathys & Squire Europe LLP**
**Theatinerstraße 7**
**80333 München (DE)**

(54) **METHOD, COMPUTER PROGRAM, DRIVE DEVICE AS WELL AS VEHICLE**

(57) The invention relates to a method (100) for operating a drive device (10) which comprises an electric machine (11) adapted to be operated by a magnetic field which depends on an electric rotor field parameter ($i_f$) of a rotor (11.2) of the electric machine (11), wherein the drive device (10) has an exciter unit (20) for brushless excitation of the rotor (11.2) for providing the electric rotor field parameter ($i_f$), wherein the exciter unit (20) comprises a stator part (21) and rotor part (22) rotatable to the stator part (21). Furthermore, the invention relates to a computer program (300), a drive device (10) and a vehicle (1).

**Fig. 3**

Printed by Jouve, 75001 PARIS (FR)

EP 3 767 820 A1

**Description**

The present invention related to a method for operating a drive device, a computer program, a drive device as well as to a vehicle.

Electric motors are known from the state of the art. There are several different types of electric motors including permanent magnet motors and wound-rotor synchronous machines. For operation of permanent magnet motors the operating magnetic field is usually defined by the permanent magnets and stator windings. In this case, the stator windings are used for controlling the magnetic field and consequently the torque of the electric motor. Since the permanent magnets provide an intrinsic magnetic field, the rotor field cannot be controlled or cannot be controlled sufficiently.

Wound-rotor synchronous machines, therefore, are provided with stator windings as well as rotor windings. To control electric parameters as rotor field current or rotor field voltage in the rotor windings, information of these parameters is usually required. Rotor windings can be supplied by brushes and slip rings for direct excitation or by means of an exciter for brushless excitation. In case of using brushes, direct measurement of rotor electric parameters is possible. However, brushes are subject to wear and tear. In case of using brushless excitation, direct measurement of rotor electric parameters is not possible and wireless data transfer or rotor electric parameter estimation is often utilized. A data transfer by wireless data, on the other hand, can be complex and unreliable, since magnetic fields can disturb the data transfer.

Therefore, it is known from WO 2004/082105 A1 to derive mathematical models for each component of the rotor and estimate the rotor field current by coupling of these models. However, the models presented in WO 2004/082105 A1 are complex and highly depend on constraints defined by the respective electric motor they are designed for. Furthermore, the rotor position has to be measured during operation which requires additional sensors for measuring the rotor position exactly.

It is therefore an object of the present invention to at least partially avoid the previous described disadvantages. In particular, it is an object of the invention to improve controlling of a magnetic field of an electric machine which is operated by the magnetic field.

Said object is solved by a method with the features of claim 1, a computer program with the features of claim 10, a drive device with the features of claim 1 and a vehicle with the features of claim 15. Further features and details of the invention result from the dependent claims, the description and the drawings. Thereby, features and details which are described with the method according to the invention naturally can also occur with the computer program according to the invention, with the drive device according to the invention and the vehicle according to the invention and vice versa, so that according to the disclosure of single aspects of the invention it can always be reciprocally related to.

According to a first aspect of the present invention a method for operating a drive device is claimed. The drive device comprises an electric machine adapted to be operated by a magnetic field which depends on an electric rotor field parameter of a rotor of the electric machine. Furthermore, the drive device has an exciter unit for brushless excitation of the rotor for providing the electric rotor field parameter. The exciter unit comprises a stator part and rotor part rotatable to the stator part. The method comprises the following steps:

- Measuring at least two electric parameters of the stator part,
- Determining an estimation of the electric rotor field parameter, wherein the estimation directly depends on the two electric parameters,
- Controlling the magnetic field in dependence on the estimation of the electric rotor field parameter.

Preferably, the electric machine is a wound-rotor synchronous machine and/or is operated as a starter generator. The drive device can be integrated in a vehicle, particularly a motor vehicle or an aircraft. The operating magnetic field preferably drives the rotor related to the stator by a torque and/or speed which is defined and/or influenced by the magnetic field. The exciter for brushless excitation of the rotor can be designed for inducing energy, particularly current and/or voltage from at least one phase, preferably the phases, of the stator part to the rotor part in a contactless way, in particular without any brushes and/or without any electrical contact between the stator part and the rotor part. Thus, the electric machine can be a brushless electric machine, in particular the electric machine the stator and the rotor of the electric machine can be designed contactless, meaning without any electrical contact with each other and/or without any brushes. Particularly, the exciter unit can be integrated into the electric machine, meaning the stator part of the exciter unit being integrated into the stator of the electric machine and the rotor part of the exciter unit being integrated into the rotor of the electric machine. Particularly, the drive device can be an electric drive device. Preferably, the drive device can be an electric drive device for a vehicle, in particular a wheel or a propeller of the vehicle. Furthermore, the drive device can be or comprise a powertrain for a vehicle.

The two electric parameters can comprise a current and/or a voltage. Preferably, one of the two electric parameters is a voltage measured in the stator part and the other electric parameter is a current measured in the stator part. Thus, the electric condition of the stator part can be represented by the two electric parameters. Preferably the two electric parameters of the stator part are the only measured parameters for determining the estimation.

The electric rotor field parameter can comprise a current and/or a voltage, preferably in a rotor winding of the rotor of the electric machine. In particular a magnetic flux of the magnetic field is at least partially defined and/or influenced by the electric rotor field parameter. Thus, the electric rotor field parameter can influence the torque and/or speed of the electric machine. Since the exciter unit is built for brushless excitation, for controlling the magnetic field the estimation of the electric rotor field parameter is used. So the electric rotor field parameter can be estimated in direct dependence on the two electric parameters of the stator part. The determining of the estimation can be performed by a mathematical, preferably analytical, model. Under the direct dependence of the estimation on the two electric parameters can be preferably understood that only one mathematical model and/or only one mathematical equation is employed for deriving and/or calculation the estimation from the two electric parameters. Preferably, there are no further steps implemented which are related to further influences of dynamical physical boundary conditions depending on the two electric parameters.

Therefore, the method according the present invention provides a possibility to control the magnetic field by using an estimation which is preferably independent of any measured rotor parameters. Thus, the brushless excitation can be realized without any data exchange between the stator part and the rotor part of the exciter and/or between the stator and the rotor of the electric machine. Furthermore, the accuracy of the estimation can be improved and/or the complexity of the estimation can be reduced by the direct dependence of the estimation on the two electric parameters of the stator part. Furthermore, it is not necessary to arrange any additional sensors, particularly on the rotor part of the exciter unit, for determining the estimation.

According to the invention it is conceivable that with determining the estimation an envelope depending on the two electric parameters is determined, particularly by calculating a formula and/or by utilizing an electric circuitry. The envelope may be understood as an envelope function of a calculating signal. The calculating signal can be calculated and/or derived from the measured two electric parameters. It is recognized that by employing the envelope various dynamical influencing parameters can be analytically eliminated and/or excluded from the calculation for determining the estimation. The formula can be a mathematical formula, particularly provided by a storage module of a control unit for the determining of the estimation. Additionally or alternatively an electric circuitry can be implemented for determining the estimation by the envelope. Therefore, the electric circuitry can be an envelope detector.

Furthermore, according to the invention, with determining the estimation at least one inductance of the exciter unit can be taken into account. The inductance can be taken into account as a, particularly constant, parameter in a calculation for determining the estimation. Therefore, the inductance can be predetermined for the exciter unit, and preferably be provided by a storage module of a control unit. In particular, the inductance can be a factor for determining the estimation.

Furthermore, the at least one inductance can involve a self-inductance of the stator part of the exciter unit and/or a mutual inductance between the stator part and the rotor part of the exciter unit. Preferably, only two inductances are used for determining the estimation. By using the at least one inductance a further parameter or further parameters of the exciter unit can be taken into account for improving the estimation of the electric rotor field parameter.

Additionally, according to the invention, the exciter unit is operated in a starter mode in which the rotor part is started from a standstill and/or in a running mode in which the rotor part is rotating. Preferably, the operation of the exciter unit can be switched between the running mode and the starter mode. The standstill and the rotation of the rotor can represent different boundary conditions for the determining of the estimation. Therefore, the determining of the estimation in the starter mode can be different to the determining of the estimation in the running mode. Therefore, an advantageous determination of the estimation can be realized by differing between the starter mode, particularly the standstill of the rotor, and the running mode, particularly the rotation of the rotor. Further, it is conceivable that only in the starter mode or only in the running mode the determining of the estimation is performed and/or only in the starter mode or only in the running mode the estimation directly depends on the two electric parameters.

It is furthermore conceivable according to the invention that with determining the estimation a calculating parameter is taken into account which is predetermined for the running mode and/or depending on an initial rotor position during the starter mode. The calculating parameter can be a constant parameter. Furthermore, the calculating parameter can represent analytical boundary conditions, preferably possible combinations of physical boundary conditions. It is recognized according to the invention that various physical boundary conditions are related to the electric rotor field parameter, particularly at least approximately, in particular combinations, only. These combinations can be identified and represented by the calculating parameter, particularly to eliminate dynamical parameters that otherwise could be measured and/or implemented by a separate mathematical model. The combination can represent an operation principle of a rectifier, preferably a diode bridge rectifier.

In particular, the rectifier can be a rotating rectifier for connecting the stator part of the exciter unit with stator windings of the stator of the electric machine.

Moreover, according to the invention, in particular in the starter mode, the calculating parameter is, preferably initially, derived from a predetermined table in dependence on the initial rotor position. The initial rotor position can comprise an angle or a range of an angle of the rotor part of the exciter unit and/or of the rotor of the electric machine at standstill. Since the calculating parameter can represent different combinations of physical boundary conditions, in particular in the starter mode, the present combination can depend on the initial rotor position. Therefore, the initial rotor position can be determined, for example by measuring and/or by retrieving the last rotor position of the last operation of the exciter unit and/or the electric machine. Preferably, the calculating parameter is derived from a range of the initial rotor position. In this case it is not necessary to determine the initial rotor position exactly for the starter mode.

It is furthermore conceivable according to the invention that with determining the estimation of the electric rotor field parameter a flux linkage calculation is performed, particularly wherein a calculating signal is determined from the flux linkage calculation. The flux linkage calculation can comprise a time integral depending on at least one, preferably the two, electric parameters of the stator. In particular, a voltage can be calculated from the two electric parameters which is integrated by the time integral to determine the calculating signal. For the calculation signal the envelope can be determined for the determination of the estimation. Thus, by using the flux linkage calculation and/or the calculating signal the estimation of the electric rotor field parameter can directly depend on the two electric parameters of the stator part, particularly in a way that provides an accurate and/or in complexity reduced approximation and/or solution of the electric rotor field parameter.

Preferably, according to the invention, with determining the estimation of the electric rotor field parameter a filtering, preferably of the two electric parameters of the stator part and/or of the calculating signal and/or the envelope, is performed. The filtering can preferably be performed by a lowpass filtering. The lowpass filtering can be performed by a calculation and/or by an electric circuitry, particularly in form of a lowpass filtering circuitry. Therefore disturbing influences which may occur by the measuring of the two electric parameters can be eliminated and/or reduced. Furthermore, it is conceivable that the filtering, particularly the lowpass filtering, is performed after the determination of the calculating signal. Thus, disturbing influences within the calculation signal can be eliminated and/or reduced. Additionally or alternatively, a mathematical transformation, preferably an alpha-beta-transformation, of the two electric parameters can be performed. Thus, the determination of the estimation can be simplified.

Furthermore, according to the invention, the controlling of the magnetic field is performed in dependence on an electric stator field parameter of a stator of the electric machine. The electric stator field parameter can comprise a current and/or a voltage, preferably in a stator winding of the stator of the electric machine. In particular a magnetic flux of the magnetic field is at least partially defined and/or influenced by the electric stator field parameter. Thus, the electric stator field parameter can influence the torque and/or speed of the electric machine. Therefore, the accuracy of controlling the magnetic field for operating the electric machine can be improved. In particular, at least two control parameters can be implemented for controlling the magnetic field, being the electric stator field parameter and the electric rotor field parameter.

For the exciter unit in the form of a single-phase exciter, a voltage equation of the stator part can particularly be rewritten as

$$v_{exc} = R_s \cdot i_{exc} + \frac{d}{dt}\Big[L_{ss} \cdot i_{exc} - M_{rs} \cdot i_f \cdot S_a \cdot \cos(\omega_r t) - M_{rs} \cdot i_f \cdot S_b \cdot \cos\Big(\omega_r t - \frac{2\pi}{3}\Big) -$$

$$M_{rs} \cdot i_f \cdot S_c \cdot \cos\Big(\omega_r t + \frac{2\pi}{3}\Big)\Big] \tag{1}$$

where the parameter $R_S$ can represent a resistance of the stator part of the exciter unit and/or the stator of the electric machine. $\frac{d}{dt}$ is the time-derivative operator. $S_a$, $S_b$, $S_c$ can be switching functions of the rectifier. $\omega_r$ can be angular speed of rotor part.

Factoring of $i_f$ in (1), and integrating both sides of (1) yields:

$$\int (v_{exc} - R_s \cdot i_{exc}) = L_{ss} \cdot i_{exc} - i_f$$

$$\cdot M_{rs} \cdot \underbrace{\Big[S_a \cdot \cos(\omega_r t) + S_b \cdot \cos\Big(\omega_r t - \frac{2\pi}{3}\Big) + S_c \cdot \cos\Big(\omega_r t + \frac{2\pi}{3}\Big)\Big]}_{K} \tag{2}$$

A formula for the determination of the estimation $i_{f,est}$ of the electric rotor field parameter with the electric rotor field parameter being the rotor field current, can preferably be written as

$$i_{f,est} = \frac{envelope(L_{SS} \cdot i_{exc} - \int (v_{exc} - R_S \cdot i_{exc}))}{K \cdot M_{rs}} \tag{3}$$

for the exciter unit in the form of a single-phase exciter. Within the presented formula for $i_{f,est}$, $L_{SS}$ and $M_{rs}$ can represent inductances of the exciter unit, particularly a self-inductance of the exciter stator and/or a mutual inductance between stator part and rotor part of the exciter unit. Preferably, one of the two electric parameters is an electric voltage $v_{exc}$ measured in the stator part and the other electric parameter is an electric current $i_{exc}$ measured in the stator part. Based on the operation principle of a diode bridge rectifier, particularly always one of armature phases can carry the rotor field current $i_f$, another phase carries $-i_f$, and one phase is in non-conducting state (carries zero current). Therefore, particularly always, values of switching functions can be a combination of 1, -1, and 0. Consequently, always a maximum value of the calculating parameter K on the right side of equation (2), in particular except for the starter mode with the rotor being at standstill, can be a square root of three (K=√3). In particular, the time integral $\int (v_{exc} - R_S \cdot i_{exc})$ represents a flux linkage calculation. For the exciter unit being a three-phase exciter the above mentioned formula representing $i_{f,est}$ can be implemented with $K = \frac{3}{2}$. Preferably, with the three-phase exciter the two electric parameters comprise an electric voltage and/or and electric current at the stator part in alpha-beta transformation, particularly being $v_{\alpha,exc}$ and/or $i_{\alpha,exc}$. For implementation into a control unit and/or an electric circuitry the calculating the flux linkage can comprise generating an imaginary orthogonal flux by imposing a quarter of the excitation period delay on the flux linkage. The real and the imaginary orthogonal flux linkages can be considered as real and imaginary parts of a complex signal. In this case, a magnitude of the complex signal can be the envelope of the flux linkage. Preferably, then a low pass filter is applied to generate a smooth envelope. In the case of a DC excitation, an envelope detection may be not required, and, for example, only low pass filtering can be applied to the estimated flux linkage.

Particularly in the starter mode, a predetermined table for deriving the calculating parameter in dependence on the initial rotor position can be given as:

| Initial rotor position $\vartheta_0$ | Conduction state of first rotor phase $\triangle a$ | Conduction state of second rotor phase $\triangle b$ | Conduction state of third rotor phase $\triangle c$ |
|---|---|---|---|
| $0° \leq \theta_0 < 30°$ | 1 | 1 | 0 |
| $30° \leq \theta_0 < 60°$ | 1 | 1 | 0 |
| $60° \leq \theta_0 < 90°$ | 0 | 1 | 1 |
| $90° \leq \theta_0 < 120°$ | 0 | 1 | 1 |
| $120° \leq \theta_0 < 150°$ | 1 | 0 | 1 |
| $150° \leq \theta_0 < 180°$ | 1 | 0 | 1 |
| $180° \leq \theta_0 < 210°$ | 1 | 1 | 0 |
| $210° \leq \theta_0 < 240°$ | 1 | 1 | 0 |
| $240° \leq \theta_0 < 270°$ | 0 | 1 | 1 |
| $270° \leq \theta_0 < 300°$ | 0 | 1 | 1 |
| $300° \leq \theta_0 < 330°$ | 1 | 0 | 1 |

(continued)

| Initial rotor position $\vartheta_0$ | Conduction state of first rotor phase $\triangle a$ | Conduction state of second rotor phase $\triangle b$ | Conduction state of third rotor phase $\triangle c$ |
|---|---|---|---|
| $330° \leq \theta_0 < 360°$ | 1 | 0 | 1 |

Thus, particularly in the starter mode, the calculating parameter K can be derived from the predetermined table as

$$K = maximum \left[ \Delta a \cdot S_a \cdot \cos(\vartheta_0) + \Delta b \cdot S_b \cdot \cos\left(\vartheta_0 - \frac{2\pi}{3}\right) + \Delta c \cdot S_c \cdot \cos\left(\vartheta_0 + \frac{2\pi}{3}\right) \right].$$

According to a further aspect of the present invention, a computer program is claimed. The computer program comprises instructions which, when the program is executed by a control unit, cause the control unit to carry out a method according to the invention, particularly the steps of the method according to the invention.

The computer program, particularly computer program product, can be implemented as computer-readable instruction code in any suitable programming language such as JAVA or C++. The computer program product may be stored on a computer-readable storage medium such as a data disk, removable drive, volatile or nonvolatile memory, or a built-in memory/processor. The instruction code can program the control unit, particularly in the form of a processor or other programmable device such as the micro controller to perform the desired functions. In addition, the computer program may be provided on a network, such as the Internet, from which it may be downloaded by a user as needed. The computer program can be realized both by means of a computer program, i.e. software, and by means of one or more special electronic circuits, i.e. in hardware, or in any hybrid form, i.e. by means of software components and hardware components. Thus, the computer program can have the same advantages like they are described in detail in relation to a method according to the invention.

According to a further aspect of the present invention, a drive device, particularly for a vehicle, is claimed. The drive device comprises an electric machine adapted to be operated by a magnetic field which depends on an electric rotor field parameter of a rotor of the electric machine. The electric machine has an exciter unit for brushless excitation of the rotor for providing the electric rotor field parameter. Furthermore, the exciter unit comprises a stator part and rotor part rotatable to the stator part. The drive device further comprises a sensor unit for determining at least two electric parameters of the stator part and a control unit. The control unit comprises an estimation module for determining an estimation of the electric rotor field parameter, wherein the estimation directly depends on the two electric parameters. The control unit further comprises an operation module for controlling the magnetic field in dependence on the estimation of the electric rotor field parameter.

Preferably, the electric machine is a wound-rotor synchronous machine and/or is operated as a starter generator. The control unit can comprise a micro controller and/or a processor. Preferably the estimation module is integrated and/or embedded into the exciter unit and the operation module is integrated and/or embedded into the electric machine. It is further conceivable, that the control unit is at least partly integrated into a central control device of a vehicle. The stator part of the exciter unit can be connected to the stator windings of the stator of the electric machine by a rectifier, preferably a diode bridge rectifier. In particular, the rectifier can be a rotating rectifier for connecting the stator part of the exciter unit with stator windings of the stator of the electric machine.

Thus, the control of the electric rotor field parameter can be improved, in particular since an estimation can be provided which is accurate, and preferably independent of further measures of electrical rotor parameters. The drive device can have the same advantages as described in detail in relation to a method according to the invention. Preferably, the control unit, particularly the estimation module and/or the operation module, is adapted to perform a method according to the invention.

Preferably, according to the invention, the exciter unit is a single-phase exciter or a three-phase exciter. The exciter unit in form of the single-phase exciter can comprise only one stator phase of the stator part for excitation of the rotor of the electric machine. The exciter unit in form of the three-phase exciter can comprise three stator phases of the stator part for excitation of the rotor of the electric machine. The determination of the estimation for the single-phase exciter can differ from the determination of the estimation for the three-phase exciter, in particular since boundary conditions of the stator part differ. In particular the calculating parameter can differ. Furthermore, for the three-phase exciter the starter mode and the running mode may use the same calculating parameter, preferably wherein the calculating parameter is constant and/or independent of the initial rotor position.

It is furthermore conceivable that the sensor unit comprises a voltage sensor and/or a current sensor for measuring the two electric parameters of the stator part. Therefore, the sensor unit can be integrated into the stator part of the exciter unit and/or the stator of the electric machine. By using a voltage sensor and/or a current sensor a simplified arrangement can be realized.

Preferably, according to the invention, the estimation module is adapted for determining the estimation an envelope depending on the two electric parameters is determined, particularly by calculating a formula and/or by utilizing an electric circuitry. The electric circuitry can be an envelope detector, for example.

Furthermore, it is conceivable according to the invention that the control unit comprises a storage module in which at least one inductance of the exciter unit is stored for being provided for the determination of the estimation and/or in which a calculating parameter for determining the estimation is stored. Additionally or alternatively, in the storage module a predetermined table for deriving a calculating parameter, particularly for determining the estimation in dependence on the initial rotor position, can be provided. Furthermore, the control unit can comprise a mode module for operating the exciter unit in a starter mode in which the rotor part is started from a standstill and/or a running mode in which the rotor part is rotating. It is further conceivable, that the control unit comprises a flux linkage module for performing a flux linkage calculation, and particularly determining a calculating signal from the flux linkage calculation. Particularly, the operation module may adapted for controlling the magnetic field in dependence on an electric stator field parameter of a stator of the electric machine. Thus, each method step and/or calculation part can be implemented into the drive according to the invention by the control unit.

According to a further aspect of the present invention, a vehicle is claimed. The vehicle comprises a drive device according to the invention.

Thus, the vehicle can have the same advantages as described in detail in relation to a method according to the invention. The vehicle can be a motor vehicle, particularly an electric motor vehicle, or an aircraft. With the drive according to the invention, the amount of sensors can be reduced and therefore a cost-efficient and lightweight construction of the vehicle can be realized. Furthermore, the control of the torque and/or of the speed of the electric machine is improved. Therefore, the interaction of the driver or pilot with the vehicle can be improved. Preferably, the electric machine of the drive is the primary drive of the vehicle.

Further advantageous measures and characteristics of the invention result from the following description as well as the figures shown. In the figures, the invention is represented in several embodiments. It is shown schematically in:

Fig. 1 a vehicle according to the invention having a drive device according to the invention,

Fig. 2 an electric machine of the drive device,

Fig. 3 an exciter unit in the form of a single-phase exciter,

Fig. 4 a method for operating a drive device with the exciter unit of Fig. 3,

Fig. 5 an exciter unit in the form of a three-phase exciter,

Fig. 6 a method for operating a drive device with the exciter unit of Fig. 5,

Fig. 7 an envelope of a calculating signal.

In the figures, the same reference signs are used for the same technical characteristics even for different embodiments.

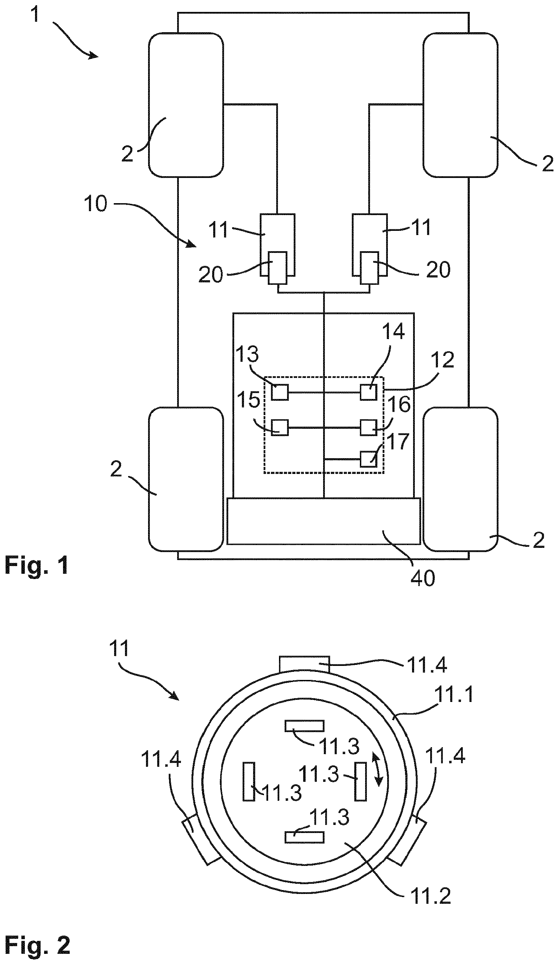

Figure 1 shows a vehicle 1 according to the invention having a drive device 10 according to the invention. The vehicle 1 is a motor vehicle, wherein the two front wheels 2 are driven by electric machines 11 of the drive device 10. Preferably, all wheels 2 of the vehicle 1 are driven by electric machines 11. It is further conceivable that only one or at least one wheel 2 is driven by an electric machine 11.

Figure 2 shows an electric machine 11 having a stator 11.1 and a rotor 11.2. The stator 11.1 comprises stator windings 11.4 and the rotor comprises rotor windings 11.3. During operation of the electric machine 11 a magnetic field is created by field parameters $i_f$, $i_s$ in the stator windings 11.4 and the rotor windings 11.3. By adjusting the currents $i_f$, $i_s$ the magnetic field is influenced. Since the torque and/or the speed of the rotor 11.2 depends on the magnetic field, the drivers control of the vehicle 1 can be improved by improving the adjustment of the magnetic field.

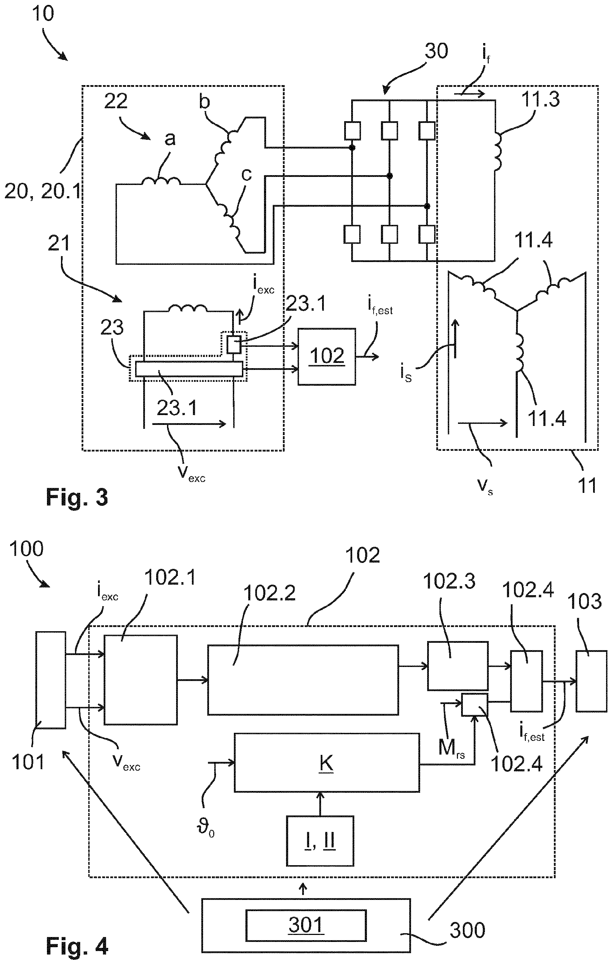

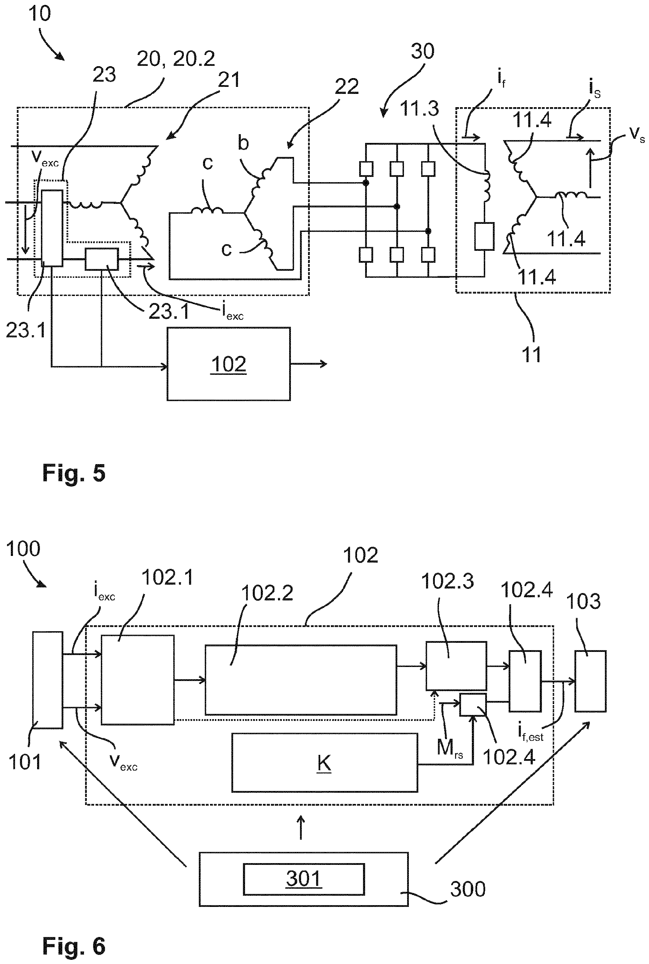

Furthermore, the vehicle 1 comprises an exciter unit 20, particularly for each electric machine 11, for brushless excitation of the rotor 11.2 for providing the electric rotor field parameter if. For providing electrical energy to the exciter unit 20 and/or the electric machine 11, the exciter unit 20 and/or the electric machine 11 is connected to a battery 40 of the vehicle 1. The exciter unit 20 and the electric machine 11 are designed brushless so that wear and tear is reduced. A controlling 103 of the magnetic field of the electric machine 11 can be performed by a control unit 12, particularly by an operation module 14 of the control unit 12, of the vehicle 1. The exciter unit 20 and the electric machine 11 can furthermore be designed as shown in figures 3 and 4 and/or as shown in figures 5 and 6.

Figure 3 shows a drive device 10 having an exciter unit 20 which is designed as a one-phase exciter 20.1. The exciter unit 20 has a stator part 21 and a rotor part 22. The rotor part 22 rotatable to the stator part 21. Furthermore, the rotor part 22 is connected to the rotor 11.2 of the electric machine 11 by a rotatable rectifier 30 which preferably is a diode bridge rectifier. The rotor part 22 of the exciter unit 20 has three phases a, b, c in which a voltage and/or current can be induced by a single phase of the stator part 21. For controlling 103 the electric rotor field parameter if, the exciter unit 20 comprises a sensor unit 23 having two electric sensors 23.1 in form of a voltage sensor and a current sensor. By measuring 101 at least two electric parameters $i_{exc}$, $v_{exc}$ of the stator part 21 of the exciter unit 20 an estimation $i_{f,est}$ of the electric rotor field parameter if can be performed, preferably by an estimation module 13 of the control unit 12.

A method 100 for operating the drive device 10 having the electric machine 11 and the exciter unit 20 is shown in figure 4. The measuring 101 of the at least two electric parameters $i_{exc}$, $v_{exc}$ of the stator part 21 comprises a measuring of a voltage $v_{exc}$ of the stator part 21 and a measuring of a current $i_{exc}$ of the stator part 21. Preferably, only the voltage $v_{exc}$ of the stator part 21 and the current $i_{exc}$ of the stator part 21 are measured for a determining 102 of an estimation $i_{f,est}$ of the electric rotor field parameter if. From the two electric parameters $i_{exc}$, $v_{exc}$ of the stator part 21 a flux linkage calculation 102.1 is performed, particularly by a flux linkage module 17 of the control unit 12. Subsequently, from the flux linkage calculation 102.1 a calculating signal 202 is determined. For the calculating signal 202 an envelope determination 102.2 can be performed.

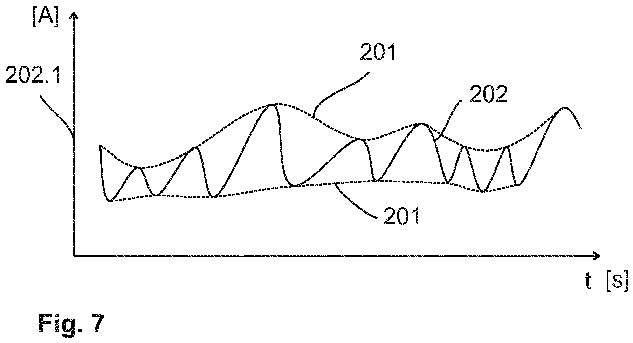

The envelope determination 102.2 is shown in figure 7. Here, signal values 202.1 are shown in Ampere A over time t in seconds s. Particularly, depending on the determination of the calculating signal 202 it is conceivable that the signal values 202.1 can be written in other units. For the calculating signal 202 an envelope 201 is determined which can be related to a magnitude of the calculating signal 202. The envelope 201 can be related to the upper magnitude and/or the lower magnitude of the calculating signal 202. Preferably, the calculating signal 202 comprises a complex signal. In particular, after the flux linkage calculation 102.1, at first an imaginary orthogonal flux is generated by imposing quarter of the excitation period delay on the flux linkage. The real and the imaginary orthogonal flux linkages can be considered as real and imaginary parts of the calculating signal in form of the complex signal.

Furthermore, a filtering 102.3 in form of a lowpass filtering is performed for receiving a smooth envelope 201. The filtering 102.3 can be part of the envelope determination 102.2 and/or can be performed after the envelope determination 102.2.

For determining 102 of the estimation $i_{f,est}$ of the electric rotor field parameter if, a calculating parameter K is taken into account. For the exciter unit 20 being a single-phase exciter, the exciter unit 20 can be operated in a starter mode I in which the rotor part 22 is started from a standstill and in a running mode II in which the rotor part 22 is rotating. Preferably, the control unit 12 comprises a mode module 16 for switching between the starter mode I and the running mode II. The calculating parameter K can vary for the starter and the running mode I, II. In the starter mode I the calculating parameter K depends on an initial rotor position $\vartheta_0$ of the rotor part 22. At the standstill, a pulsating field of the winding of the stator part 21 can induce unbalanced voltages. Therefore, an analysis of the exciter unit 20 at standstill can be different from the running mode II. Preferably, the calculating parameter K can represent a combination related to switching functions of the rectifier 30. Thus, the calculating parameter K can be derived from a predetermined table in dependence on the initial rotor position $\vartheta_0$. Preferably, in the running mode II, the calculating parameter K can be set to square root of three. The calculation parameter K and/or the predetermined table can be provided by a storage module 15 of the control unit 12.

Additionally, further calculations 102.4, for example including multiplying and/or dividing parameters, for determining 102 the estimation $i_{f,est}$ can be performed. In particular, at least one inductance $M_{rs}$, preferably two inductances $M_{rs}$, Lss, of the stator part 21 are taken into account. The inductances can involve a self-inductance LSS of the stator part 21 of the exciter unit 20 and/or a mutual inductance $M_{rs}$ between the stator part 21 and the rotor part 22 of the exciter unit 20. The inductances $M_{rs}$, Lss can be provided by a storage module 15 of the control unit 12.

Thus, the estimation $i_{f,est}$ directly depends on the two electric parameters. The determination 102 of the estimation $i_{f,est}$ can be performed by a processor and/or a micro controller of the control unit 12, particularly calculating a formula. Furthermore, it is conceivable that the control unit 12 comprises at least one electric circuitry for performing the determination 102 of the estimation $i_{f,est}$.

After having determined the estimation $i_{f,est}$ of the electric rotor field parameter if, the controlling 103 of the magnetic field is performed in dependence on the estimation $i_{f,est}$ of the rotor field parameter if. Furthermore, the controlling 103 of the magnetic field can be performed in dependence on an electric stator field parameter $i_s$, $v_s$ of a stator 11.1 of the electric machine 11. Therefore, accuracy of controlling the flux of the magnetic field can be improved.

Figure 5 shows a drive device 10 having an electric machine 11 and an exciter unit 20 which is designed as a three-phase exciter 20.2. Therefore, a stator part 21 of the exciter unit 20 has three phases. A method 100 for operating the drive device 10 having the electric machine 11 and the exciter unit 20 of figure 5 is shown in figure 6. The controlling 103 of the magnetic field operating the electric machine 11 is performed similar to the embodiment of figures 3 and 4. However, since the exciter unit 20 is a three-phase exciter, the calculating parameter K for representing a rotating rectifier

connecting the rotor part 22 of the exciter unit 20 and the rotor 11.2 of the electric machine 11 can be simplified. In particular, the calculating parameter K can be set to $\frac{3}{2}$ for all operation modes I, II. Furthermore, in the case of a DC excitation, an envelope calculation 102.2 may not be required, and, for example, particularly low pass filtering 102.3 can be applied subsequent to the flux linkage calculation 102.1, directly. Furthermore, the method 100 applied to a three-phase exciter 20.2 preferably comprises a mathematical transformation, particularly an alpha-beta-transformation of the two electric parameters $i_{exc}$, $v_{exc}$ of the stator part 21, particularly at least for receiving $i_{\alpha,exc}$, $v_{\alpha,exc}$.

Preferably, the method 100 according to figure 4 and/or the method 100 can be performed by a computer program 300 which comprises instructions 301 which, when the program 300 is executed by the control unit 12, cause the control unit 12 to carry out the respective method 100.

The preceding explanation of the embodiment describes the present invention exclusively in the context of embodiments. Of course, individual features of the present invention can be freely combined with each other without leaving the scope of the present invention/claims, if technically reasonable.

**List of reference signs**

1      vehicle
2      wheel

10      drive device
11      electric machine
11.1      stator
11.2      rotor
11.3      rotor windings
11.4      stator windings
12      control unit
13      estimation module
14      operation module
15      storage module
16      mode module
17      flux linkage module

20      exciter unit
20.1      single-phase exciter
20.2      three-phase exciter
21      stator part
22      rotor part
23      sensor unit
23.1      electric sensor

30      rectifier

40      battery

100      method
101      determining $i_{exc}$, $v_{exc}$
102      determining $i_{f,est}$
102.1      flux linkage calculation
102.2      envelope determination
102.3      filtering
102.4      further calculation
103      controlling

201      envelope
202      calculating signal

202.1    signal value

300    computer program
301    instructions

I    starter mode
II    running mode

$i_{exc}$    electric parameter, in particular electric current, of 21
$v_{exc}$    electric parameter, in particular electric voltage, of 21
$i_s$    electric parameter, in particular electric current, of 11.1
$v_s$    electric parameter, in particular electric voltage, of 11.1
$i_f$    electric rotor field parameter, in particular rotor field current
$i_{f,est}$    estimation of if
K    calculating parameter
$L_{SS}$    inductance
$M_{rs}$    inductance
a,b,c    rotor phases of 20

**Claims**

1.    Method (100) for operating a drive device (10) which comprises an electric machine (11) adapted to be operated by a magnetic field which depends on an electric rotor field parameter (if) of a rotor (11.2) of the electric machine (11), wherein the drive device (10) has an exciter unit (20) for brushless excitation of the rotor (11.2) for providing the electric rotor field parameter (if),
     wherein the exciter unit (20) comprises a stator part (21) and rotor part (22) rotatable to the stator part (21), the method (100) comprising the following steps:

        - Measuring (101) at least two electric parameters (iexc, $v_{exc}$) of the stator part (21),
        - Determining (102) an estimation ($i_{f,est}$) of the electric rotor field parameter (if), wherein the estimation ($i_{f,est}$) directly depends on the two electric parameters ($i_{exc}$, $v_{exc}$) of the stator part (21),
        - Controlling (103) the magnetic field in dependence on the estimation ($i_{f,est}$) of the electric rotor field parameter ($i_f$).

2.    Method (100) according to claim 1,
     **characterized in that**
     with determining (102) the estimation ($i_{f,est}$) an envelope (201) depending on the two electric parameters ($i_{exc}$, $v_{exc}$) is determined, particularly by calculating a formula and/or by utilizing an electric circuitry.

3.    Method (100) according to claim 1 or 2,
     **characterized in that**
     with determining (102) the estimation ($i_{f,est}$) at least one inductance ($L_{SS}$, $M_{rs}$) of the exciter unit (20) is taken into account.

4.    Method (100) according to one of the preceding claims,
     **characterized in that**
     the exciter unit (20) is operated in a starter mode (I) in which the rotor part (22) is started from a standstill and/or in a running mode (II) in which the rotor part (22) is rotating.

5.    Method (100) according to one of the preceding claims,
     **characterized in that**
     with determining (102) the estimation ($i_{f,est}$) a calculating parameter (K) is taken into account which is predetermined for the running mode (II) and/or depending on an initial rotor position ($\vartheta_0$) during the starter mode (I).

6.    Method (100) according to one of the preceding claims,
     **characterized in that**
     the calculating parameter (K) is derived from a predetermined table in dependence on the initial rotor position ($\vartheta_0$).

**7.** Method (100) according to one of the preceding claims,
**characterized in that**
with determining (102) the estimation ($i_{f,est}$) of the electric rotor field parameter ($i_f$) a flux linkage calculation (102.1) is performed, particularly wherein a calculating signal (202) is determined from the flux linkage calculation (102.1).

**8.** Method (100) according to one of the preceding claims,
**characterized in that**
with determining (102) the estimation ($i_{f,est}$) of the electric rotor field parameter ($i_f$) a filtering (102.3) is performed.

**9.** Method (100) according to one of the preceding claims,
**characterized in that**
the controlling (103) of the magnetic field is performed in dependence on an electric stator field parameter ($i_s$, $v_s$) of a stator (11.1) of the electric machine (11).

**10.** A computer program (300) comprising instructions (301) which, when the program (300) is executed by a control unit (12), cause the control unit (12) to carry out a method (100) according to one of the preceding claims.

**11.** Drive device (10) comprising
an electric machine (11) adapted to be operated by a magnetic field which depends on an electric rotor field parameter ($i_{exc}$, $v_{exc}$) of a rotor (11.2) of the electric machine (11),
wherein the electric machine (11) has an exciter unit (20) for brushless excitation of the rotor (11.2) for providing the electric rotor field parameter (if), wherein the exciter unit (20) comprises a stator part (21) and rotor part (22) rotatable to the stator part (21),
wherein the drive device (10) further comprises a sensor unit (23) for determining (101) at least two electric parameters ($i_{exc}$, $v_{exc}$) of the stator part (21) and a control unit (12) having an estimation module (13) for determining (102) an estimation ($i_{f,est}$) of the electric rotor field parameter (if) directly depending on the two electric parameters ($i_{exc}$, $v_{exc}$) and an operation module (14) for controlling (103) the magnetic field in dependence on the estimation ($i_{f,est}$) of the electric rotor field parameter ($i_f$).

**12.** Drive device (10) according to claim 11,
**characterized in that**
the exciter unit (20) is a single-phase exciter (20.1) or a three-phase exciter (20.2).

**13.** Drive device (10) according to one of the claims 11 or 12,
**characterized in that**
the sensor unit (23) comprises a voltage sensor (23.1) and/or a current sensor (23.1) for measuring the two electric parameters ($i_{exc}$, $v_{exc}$) of the stator part (21).

**14.** Drive device (10) according to one of the claims 11 to 13,
**characterized in that**
the control unit (12), particularly the estimation module (13) and/or the operation module (14), is adapted to perform a method (100) according to one of the claims 1 to 10.

**15.** Vehicle (1) comprising a drive device (10) according to one of the claims 11 to 14.

1

2

2

10

11            11

20            20

13        14        12

15    16

17

40

**Fig. 1**

11

11.4

11.1

11.3

11.4

11.3

11.3

11.3

11.4

11.3

11.2

**Fig. 2**

Fig. 3

Fig. 4

**Fig. 5**

**Fig. 6**

**Fig. 7**

Europäisches
Patentamt

European
Patent Office

Office européen
des brevets

## EUROPEAN SEARCH REPORT

**Application Number**

EP 19 18 7176

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S.-A. VIP ET AL: "Rotary transformer with ferrite core for brushless excitation of synchronous machines", 2016 XXII INTERNATIONAL CONFERENCE ON ELECTRICAL MACHINES (ICEM), 4 September 2016 (2016-09-04), pages 890-896, XP055654801, DOI: 10.1109/ICELMACH.2016.7732631 ISBN: 978-1-5090-2538-1 * page 1, paragraph abstract * * equation 11; page 4 * * page 3, right-hand column, line 3; figures 7, 3 * * education 5; page 3, right-hand column, paragraph middle-part *<br>----- | 1-3, 10-12,15 | INV. H02P23/14 H02P9/30 |
| X | US 2007/222220 A1 (HUANG HAO [US] ET AL) 27 September 2007 (2007-09-27) * paragraph [0029]; figure 3 *<br>----- | 1,4-15 | |
| | | | **TECHNICAL FIELDS SEARCHED (IPC)** |
| | | | H02P |

The present search report has been drawn up for all claims

| Place of search | Date of completion of the search | Examiner |
|---|---|---|
| Munich | 6 January 2020 | Fligl, Stanislav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 767 820 A1

## ANNEX TO THE EUROPEAN SEARCH REPORT
## ON EUROPEAN PATENT APPLICATION NO.

EP 19 18 7176

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2020

| Patent document cited in search report | Publication date | Patent family member(s) | Publication date |
|---|---|---|---|
| US 2007222220 A1 | 27-09-2007 | BR    PI0709360 A2 | 12-07-2011 |
|  |  | CA    2646041 A1 | 04-10-2007 |
|  |  | CA    2915144 A1 | 04-10-2007 |
|  |  | CN    101449052 A | 03-06-2009 |
|  |  | CN    102287305 A | 21-12-2011 |
|  |  | EP    2002115 A2 | 17-12-2008 |
|  |  | JP    5450048 B2 | 26-03-2014 |
|  |  | JP    5681678 B2 | 11-03-2015 |
|  |  | JP    2009531015 A | 27-08-2009 |
|  |  | JP    2012235691 A | 29-11-2012 |
|  |  | US    2007222220 A1 | 27-09-2007 |
|  |  | US    2009174188 A1 | 09-07-2009 |
|  |  | WO    2007111970 A2 | 04-10-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004082105 A1